# EUROPÄISCHE PATENTSCHRIFT

(11) **EP 2 049 368 B1**
(45) Veröffentlichungstag und Bekanntmachung des Hinweises auf die Patenterteilung: **30.10.2013**
(21) Anmeldenummer: 07801463.6
(22) Anmeldetag: 30.07.2007
(51) Int. Cl.: B32B 5/18, B32B 5/26, B32B 7/12, B32B 17/02, B32B 27/32, B32B 27/40, B60R 13/02

(54) **FAHRZEUGVERKLEIDUNGSTEIL MIT IM WESENTLICHEN SYMMETRISCH VORGESEHENEM SCHICHTAUFBAU UND VERFAHREN ZUR HERSTELLUNG EINES FAHRZEUGVERKLEIDUNGSTEILS**
VEHICLE CLADDING PART WITH SUBSTANTIALLY SYMMETRICALLY PROVIDED LAYER STRUCTURE AND METHOD FOR THE PRODUCTION OF A VEHICLE CLADDING PART
PIÈCE D'HABILLAGE DE VÉHICULE COMPRENANT UNE STRUCTURE STRATIFIÉE ESSENTIELLEMENT SYMÉTRIQUE ET PROCÉDÉ DE FABRICATION D'UNE PIÈCE D'HABILLAGE DE VÉHICULE

(30) Priorität: 31.07.2006 DE 102006035922
(43) Veröffentlichungstag der Anmeldung: 22.04.2009
(73) Patentinhaber: Johnson Controls Headliner GmbH, 66802 Uberherrn (DE)
(72) Erfinder: MAILÄNDER, Ralf, 9357 Bettendorf (LU)
(74) Vertreter: Schwöbel, Thilo K.
(86) Internationale Anmeldenummer: PCT/EP2007/006711
(87) Internationale Veröffentlichungsnummer: WO 2008/014949

(56) Entgegenhaltungen:
- EP-A- 1 319 554
- WO-A-00/64706
- WO-A-02/02325
- WO-A-02/04252
- DE-U1- 9 421 206
- US-A- 5 709 925

## Beschreibung

Die vorliegende Erfindung betrifft ein Fahrzeugverkleidungsteil, insbesondere für den Fahrzeuginnenraum, mit einer Sichtseite und einer gegenüberliegenden Rückseite, wobei das Fahrzeugverkleidungsteil wenigstens eine Glasfaserlage und eine Polyurethan-Schaumlage aufweist, wobei das Fahrzeugverkleidungsteil femer seiner Rückseite zugewandt eine zweite Barrierefolienlage und eine Rückseitenvlieslage aufweist.

Solche Fahrzeugverkleidungsteile sind an sich bekannt. Beispielsweise ist aus der deutschen Patentschrift DE 32 13 610 C2 ein Verfahren zur Herstellung leichter, steifer oder halbsteifer mehrschichtiger Elemente und deren Verwendung bekannt. Weiterhin ist aus der DE 600 07 342 T2 ein Verfahren zur Herstellung eines Dachhimmels mit integriertem, energieabsorbierendem Schaum bekannt, wobei die Verwendung von Tramivex-Substrat in einem Dachhimmel offenbart wird. Bei den bekannten Zusammensetzungen von Fahrzeugverkleidungsteilen ist es nachteilig, dass diese Fahrzeugverkleidungsteile zum einen mit vergleichsweise teueren Materialien aufgebaut sind und zum anderen mit vergleichsweise kostenträchtigen Herstellungsverfahren hergestellt werden, wie beispielsweise die Verwendung von teueren Klebevliesen und die Verwendung einer Kalanderschutzfolie mit nachfolgender Entsorgung des anhaftenden Isocyanats.

WO 00/64706 A offenbart ein gattungsgemäßes Verkleidungsteil sowie ein gattungsgemäßes Verfahren zu dessen Herstellung.

Aufgabe der vorliegenden Erfindung ist es, insbesondere die genannten Nachteile des Standes der Technik zu beseitigen oder zu verringern und ein reißfestes, lebensdauerstabiles sowie kostengünstiges Fahrzeugverkleidungsteil zu schaffen.

Diese Aufgabe wird mit einem Fahrzeugverkleidungsteil, insbesondere für den Fahrzeuginnenraum, mit einer Sichtseite und einer gegenüberliegenden Rückseite gelöst, wobei das Fahrzeugverkleidungsteil wenigstens eine Glasfaserlage und eine Polyurethan-Schaumlage aufweist, wobei das Fahrzeugverkleidungsteil femer seiner Rückseite zugewandt eine zweite Barrierefolienlage und eine Rückseitenvlieslage aufweist, wobei femer das Fahrzeugverkleidungsteil seiner Vorderseite zugewandt zunächst eine erste Barrierefolienlage aufweist und weiterhin stärker der Vorderseite zugewandt eine Sichtseitenvlieslage aufweist. Hierdurch ist es erfindungsgemäß vorteilhaft möglich, eine Herstellung des Fahrzeugverkleidungsteils mit einem Kalandrierschritt vorzusehen, wobei keinerlei Abfall an überschüssigem Isocyanat anfällt. Hierdurch werden die Entsorgungskosten bei der Produktion des Fahrzeugverkleidungsteils erheblich reduziert und es wird Verbrauch an Isocyanat (MDI) erheblich reduziert.

Erfindungsgemäß ist es weiterhin vorteilhaft möglich, dass das insbesondere aus Lycra gefertigte Spanntuch als Medium zwischen dem vorderseitigen Werkzeug und der obersten Lage des Fahrzeugverkleidungsteils entfallen kann. Hierdurch werden Formungsfehler zwischen der Vorderseite des Fahrzeugverkleidungsteils (A-Seite) und des Formwerkzeugs vermieden oder reduziert, was zum einen die Weiterverarbeitung des Fahrzeugverkleidungsteils (etwa eine Beschichtung bzw. eine Aufbringung eines Dekormaterials) als auch die Formtreue des Fahrzeugverkleidungsteils verbessert. Die Verwendung eines Spanntuchs beispielsweise aus Lycra (ein Textil mit einem hohen Grad an Dehnungsfähigkeit) verursacht eine Vielzahl von kostenintensiven Prozessabbrüchen mit den damit verbundenen Wiederanläufen des Verfahrens, was darüber hinaus zu einem erheblichen Abfallvolumen führt, etwa auf Grund der Anlagenfüllung mit frischem Material. Daher wird erfindungsgemäß durch die Möglichkeit, auf ein Spanntuch zu verzichten, eine erhebliche Verbesserung der Herstellungskapazität einer Formungsmaschine realisiert, in dem diese Prozessunterbrechungen vermieden werden.

Erfindungsgemäß ist es durch den Aufbau des Fahrzeugverkleidungsteils femer vorteilhaft möglich, eine Verbesserung des Airbagverhaltens dadurch zu erzielen, dass die Reißfestigkeit des Fahrzeugverkleidungsteils erhöht wird und sich keine oder wenige kleine Partikel bei einem Aufreißen des Fahrzeugverkleidungsteils lösen.

Vorteilhaft ist erfindungsgemäß ferner, dass die Zykluszeit zur Herstellung eines erfindungsgemäßen Fahrzeugverkleidungsteils dadurch verringert werden kann, dass eine höhere Temperatur des Formwerkzeugs auf der Vorderseite (A-Seite) toleriert wird, insbesondere deshalb, weil kein Spanntuch erforderlich ist. Das Fahrzeugverkleidungsteil weist erfindungsgemäß keinerlei Polyamidmaterial bzw. Polyamidfolie auf, so dass keinerlei Caprolactam innerhalb des Fahrzeugverkleidungsteils vorhanden ist und entsprechende Emissionen vermieden werden. Trotz des Verzichtes auf eine Polyamidlage bzw. einer Polyamidfolie kann mit dem erfindungsgemäß Fahrzeugverkleidungsteil die selbe Biegesteifigkeit erzielt werden, wobei darüber hinaus etwa 10 % an Isocyanat (MDI) eingespart werden kann.

Erfindungsgemäß ist es femer von Vorteil, dass die Oberflächenqualität nach dem Aufbringen eines Dekormaterials verbessert werden kann. Die Oberfläche ist nämlich hierbei gleichmäßiger und glatter als bei bisherigen Fahrzeugverkleidungsteilen unter Verwendung insbesondere eines Spanntuchs während des Herstellungsprozesses.

Weitere vorteilhafte Ausführungsformen der Erfindung ergeben sich aus den Unter-ansprüchen. Beispielsweise ist bevorzugt, dass die Sichtseitenvlieslage rückseitig ein Klebemittel aufweist, wobei das Klebemittel insbesondere nichtzusammenhängende Klebepunkte aufweist, insbesondere LDPE-Klebepunkte. Hierdurch ist ein besonders stabiler Aufbau des Fahrzeugverkleidungsteils mit einer guten Haftung zwischen den vorderseitigen Sichtseitenvlies und der ersten Barrierefolienlage möglich.

Erfindungsgemäß ist femer bevorzugt, dass die erste Barrierefolienlage und/oder die zweite Barrierefolienlage eine Barriereschicht aufweist. Hierdurch wird verhindert, dass Isocyanat vom zentralen Bereich (d. h. im Bereich der Glasfaserlage bzw. des Polyurethan-Schaums) den äußeren Bereich des Fahrzeugverkleidungsteils gelangen und so beispielsweise eine Kalanderwalze bzw. den Herstellungsprozess des Fahrzeugverkleidungsteils negativ beeinflussen kann.

Ferner ist es erfindungsgemäß bevorzugt, dass die erste Barrierefolienlage und/oder die zweite Barrierefolienlage der Barriereschicht benachbart einseitig oder beidseitig eine Klebeschicht aufweist. Hierdurch kann eine besonders intensive und feste Verbindung und damit eine stabile Struktur des Fahrzeugverkleidungsteils erzielt werden.

Erfindungsgemäß ist femer bevorzugt, dass der Schichtaufbau des Fahrzeugverkleidungsteils zwischen der Sichtseitenvlieslage und der Rückseitenvlieslage im wesentlichen symmetrisch vorgesehen ist oder dass der Schichtaufbau des Fahrzeugverkleidungsteils zwischen der Sichtseitenvlieslage und der Rückseitenvlieslage außer dem Klebemittel symmetrisch vorgesehen ist. Hierdurch ist ein einfacher und kostengünstig durchführbarer Herstellungsprozess des erfindungsgemäßen Fahrzeugverkleidungsteils mit vergleichsweise einfachen Mitteln möglich.

Bevorzugt ist ferner, dass die Vorderseitenvlieslage und/oder die Rückseitenvlieslage ein Polyestervliesmaterial aufweist und/oder dass die Barrierefolienlage der ersten Barrierefolienlage und/oder der zweiten Barrierefolienlage eine Polyethylen-Barriereschicht aufweist und/oder dass die Klebeschicht oder die weitere Klebeschicht der ersten Barrierefolienlage und/oder der zweiten Barrierefolienlage eine Polyethylen-Klebeschicht aufweist. Hierdurch ist es mittels eines vergleichsweise einfachen Herstellverfahren und unter Verwendung von zur selben Materialfamilie gehörenden Teilen des Fahrzeugverkleidungsteils möglich, ein stabiles und den Lebensdaueransprüchen entsprechendes Fahrzeugverkleidungsteil herzustellen. Als Polyethylen-Klebeschicht bzw. als Polyethylen-Barriereschicht ist im Rahmen der vorliegenden Erfindung insbesondere eine Polymerschicht basierend auf Polyethylen oder einem Ethylen-Copolymerisator zu verstehen.

Ein weiterer Gegenstand der vorliegenden Erfindung ist ein Verfahren zur Herstellung eines Fahrzeugverkleidungsteils, wobei die Sichtseitenvlieslage, die erste Barrierefolienlage, die Glasfaserlage, die Polyurethan-Schaumlage, die zweite Barrierefolienlage und die Rückseitenvlieslage miteinander kalandriert werden. Hierdurch kann erfindungsgemäß ein besonders inniger und stabiler Verbund der einzelnen Bestandteile des Fahrzeugverkleidungsteils hergestellt werden, was zu der Möglichkeit führt, Fahrzeugverkleidungsteile besonders einfach, schnell und kostengünstig herzustellen.

Ausführungsbeispiele der Erfindung sind in den Zeichnungen dargestellt in der nachfolgenden Beschreibung näher erläutert.
- **Figur 1**: zeigt in schematischer Weise den Schichtaufbau eines bekannten Fahrzeugverkleidungsteils.
- **Figur 2**: zeigt in schematischer Weise den Schichtaufbau eines erfindungsgemäßen Fahrzeugverkleidungsteils in einer Explosionsdarstellung.
- **Figur 3**: zeigt eine weitere Darstellung des Schichtaufbaus des erfindungsgemäßen Fahrzeugverkleidungsteils.
- **Figur 4**: zeigt verschiedene Ausführungsformen einer Sichtseitenvlieslage und einer ersten Barrierefolienlage.

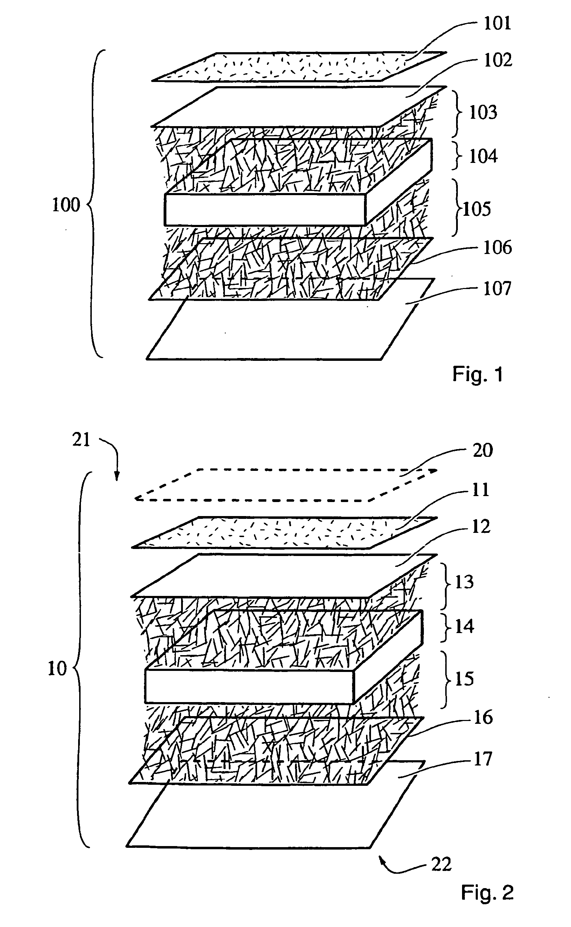

In **Figur 1** ist eine schematische Darstellung eines bekannten Schichtaufbaus eines bekannten Fahrzeugverkleidungsteils 100 in Explosionsdarstellung dargestellt. Hierbei weist der bekannte Schichtaufbau (ein sogenannter Tramivex-Schichtaufbau) von der Vorderseite (A-Seite) zur Rückseite einen Polyurethan-Film bzw. eine Polyurethan-Folie 101, ein Klebevlies aus Polyamid 102, eine Glasfaserschicht 103, eine Polyurethan-Schaumschicht 104, eine weitere Glasfaserschicht 105, einen Kleber-Barrierefilm (106) sowie ein sogenanntes Scrim aus Polyestherviskose 107 auf. Nachteilig bei der Herstellung eines solchen Fahrzeugverkleidungsteils100 ist es, dass eine Schutzfolie (nicht dargestellt) Verwendung finden muss, die zusammen mit anhaftendem Isocyanat entsorgt werden muss, was den Herstellungsvorgang maßgeblich verteuert.

In **Figur 2** ist in schematischer Weise eine Explosionsdarstellung eines erfindungsgemäßen Fahrzeugverkleidungsteils 10 dargestellt. Das Fahrzeugverkleidungsteil 10 weist eine Sichtseite 21 und eine gegenüberliegende Rückseite 22 auf. Die Sichtseite 21 wird im folgenden auch als A-Seite bezeichnet. Das Fahrzeugverkleidungsteil 10 weist erfindungsgemäß eine Sichtseitenvlieslage 11, eine erste Barrierefolienlage 12, eine Glasfaserlage 13, eine Polyurethan-Schaumlage 14, eine weitere Glasfaserlage 15, eine zweite Barrierefolienlage 16 und eine Rückseitenvlieslage 17 auf. In einem in das Fahrzeug einbaubaren Zustand des Fahreugverkleidungsteils 10 kann dieses weiterhin auch eine Dekorschicht 20 bzw. ein Dekormaterial auf der Sichtseite 21 des Fahrzeugverkleidungsteils 10 aufweisen, welche in **Figur 2** mit gestrichelter Linie angedeutet ist.

Erfindungsgemäß wird das Fahrzeugverkleidungsteil 10 inklusive der Dekorfolie bzw. dem Dekormaterial 20 bevorzugt in einem zweistufigen Prozess hergestellt, bei dem zunächst das Fahrzeugverkleidungsteil 10 ohne das Dekormaterial 20 (d. h. die Materiallagen 11 bis 17) miteinander verbunden werden und auch zumindest grob geschnitten und geformt werden, und wobei in einem zweiten Schritt die Dekormateriallage auf ein solchermaßen hergestelltes Fahrzeugverkleidungsteil 10 in einem Formungs- und Verbindungsprozess aufgebracht wird. Hierdurch ist es erfindungsgemäß vorteilhaft möglich, dass der Zuschnitt des Dekormaterials 20 sich gegenüber dem Zuschnitt des restlichen Fahrzeugverkleidungsteils 10 unterscheidet, so dass ein Umbug des Dekormaterials 20 um zumindest einen Teil der Kanten des Fahrzeugverkleidungsteils 10 möglich ist (nicht dargestellt).

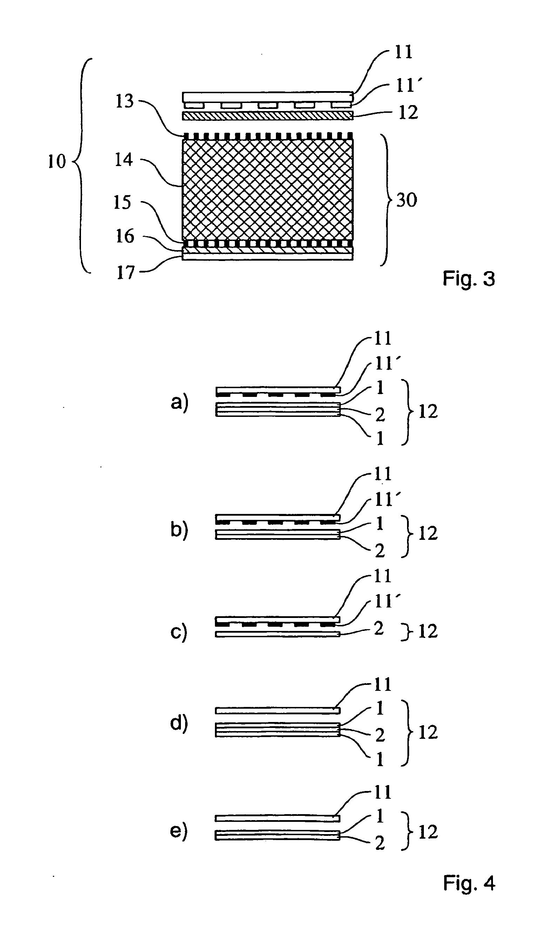

In **Figur 3** ist eine weitere schematische Darstellung des Schichtaufbaus des erfindungsgemäßen Fahrzeugverkleidungsteils 10 mit den Materiallagen 11 bis 17 dargestellt. Aus **Figur 3** ist insbesondere ersichtlich, dass zwischen der Sichtseitenvlieslage 11 und der ersten Barrierefolienlage 12 ein Klebemittel 11' derart angeordnet sein kann, dass das Klebemittel nichtzusammenhängende Punkte umfasst, insbesondere sogenannte LDPE-Klebepunkte (Low Density Polyethylen). Die Materiallagen 13 bis 17 sind in **Figur 3** mit dem Bezugszeichen 30 bezeichnet. Dieser Bereich des Fahrzeugverkleidungsteils 10 kann identisch vorgesehen sein zu dem entsprechenden Bereich des in **Figur 1** dargestellten Schichtaufbaus des bekannten Fahrzeugverkleidungsteils 100.

In **Figur 4** sind verschiedene Varianten der Sichtseitenvlieslage 11 und der Barrierefolienlage 12 in einer schematischen Querschnittsdarstellung und in Explosionsdarstellung dargestellt. In **Figur 4a** ist ein Ausführungsbeispiel mit einer Sichtseitenvlieslage 11 und einem hierzu benachbart vorgesehenen Klebemittel 11' abgebildet, welches benachbart zu der ersten Barrierefolienlage 12 vorgesehen ist. Die erste Barrierefolienlage 12 weist im Beispiel gemäß **Figur 4a** eine Barriereschicht 2 und beidseitig benachbart hierzu jeweils eine Klebeschicht 1 auf. Hierdurch kann aufgrund der benachbart vorgesehenen Klebeschicht 1 (Richtung zur Vorderseite 21 hin) und dem Klebemittel 11' eine besonders innige Verbindung zwischen der Sichtseitenvlieslage 11 und der ersten Barrierefolienlage 12 hergestellt werden.

Das Ausführungsbeispiel gemäß der **Figur 4b** entspricht dem der **Figur 4a**, wobei jedoch die Klebeschicht 1 lediglich einseitig benachbart zu der Barriereschicht 2 der Barrierefolienlage 12 vorgesehen ist und zwar auf der Seite benachbart zum Klebemittel 11' hin.

Gemäß der Ausführungsform nach **Figur 4c** weist die erste Barrierefolienlage 12 im wesentlichen lediglich die Barriereschicht 2 auf. Benachbart zu Barriereschicht 2 ist in Richtung zur Vorderseite 21 hin, das Klebemittel 11' vorgesehen, so dass auch hier eine gute Verbindung zwischen der Sichtseitenvlieslage und der Barrierefolienlage 12 vorliegt. Die Ausführungsformen gemäß den **Figuren 4d** bzw. **4e** entsprechen den Ausführungsformen gemäß den **Figuren 4a** bzw. **4b** mit dem Unterschied, dass benachbart zur Sichtseitenvlieslage 11 in Richtung zur Rückseite 22 des Fahrzeugverkleidungsteils 10 hin kein Klebemittel 11' in Form von nicht zusammenhängenden Klebepunkten 11' vorgesehen sind, sondern die durchgehende Klebeschicht 1 der Barrierefolienlage 12, an welche sich sowohl gemäß der Figur 4d als auch gemäß der Figur 4e die Barriereschicht 2 der Barrierefolienlage 12 anschließt. Bei der Ausführungsform gemäß der Figur 4d ist benachbart zur Barriereschicht 2 ebenfalls eine Klebeschicht 1 ausgebildet, d.h. die erste Barrierefolienlage 12 weist der Barriereschicht 2 benachbart beidseitig eine Klebeschicht 1 auf. Dies ist bei der Figur 4e lediglich ausgehend von der Barriereschicht 2 in Richtung zur Vorderseite 21 hin der Fall.

Gemäß allen Ausführungsformen der vorliegenden Erfindung ist es vorgesehen, dass die Sichtseitenvlieslage 11 ein insbesondere Polyester basiertes Material ist, welches insbesondere kreuzgelegt ist und mit Polyethylen beschichtet ist. Ferner ist die Barrierefolienlage 12 als eine Polyethylen-basierte Kunststofffolie vorgesehen, wobei sowohl die Barriereschicht 2 als auch die Klebeschicht 1 Polyethylen-basiert ausgebildet sein kann bzw. wobei die Barriereschicht 2 Polyurethan-basiert und die Klebeschicht 1 Polyethylen-basiert ausgebildet sein kann. Als weitere Ausführungsform kann es vorgesehen sein, dass die Barriereschicht 2 Polyesterbasiert oder Polyamid-basiert ist und weiterhin die Klebeschicht 1 Polyethylen-basiert ist.

Die Glasfaserlagen sind bevorzugt mit Isocyanat bzw. katalytischem Wasser imprägniert bzw. getränkt. Das Gleiche gilt die Polyurethan-Schaumlage 14. Die zweite Barrierefolienlage 16 umfasst erfindungsgemäß bevorzugt ebenfalls eine Barriereschicht 2 sowie benachbart beidseitig davon eine Klebeschicht 1 auf und ist ebenfalls als Polyethylen basierte Kunststofffolie (Polyethylen basiert hinsichtlich der Barriereschicht und Polyethylen basiert hinsichtlich der Klebeschicht) oder Polyurethan/Polyethylen- basiert (Polyethylen basiert für die Klebeschicht und Polyurethan basiert für die Barriereschicht) ausgebildet. Die Rückseitenvlieslage 17 ist bevorzugt ebenfalls als Polyestherviskoselage ausgebildet.

Erfindungsgemäß weist das Fahrzeugverkleidungsteils 10 insbesondere ein Flächengewicht von bis etwa 820 g/m², wobei auf die Sichtseitenvlieslage 11 etwa 50 g/m² entfallen, wobei auf die erste Barrierenfolienlage 12 etwa 30 g/m² entfallen, wobei auf die beiden Glasfaserlagen 13, 15 jeweils etwa 80-125 g/m² (je nach gewünschter Biegesteifigkeit) entfallen, wobei auf die Polyurethan-Schaumlage 14 ungefähr 400 g/m² entfallen (hierbei entfallen etwa 140 g/m² auf den Polyurethan-Schaum und etwa 280 g/m² auf, das Isocyanat und das katalytische Wasser/DEMA), wobei auf die zweite Barrierefolienlage 16 etwa 30 g/m² entfallen und wobei auf die Rückseitenflieslage 17 etwa 30 g/m² entfallen. Bei der Sichtseitenvlieslage 11 entfallen etwa 40 g/m² auf das Polyestervlies und etwa 10 g/m² auf das Klebemittel 11' (bevorzugt LDPE-Klebepunkte). Bei der ersten Barrierefolienlage 12 handelt es sich bevorzugt um einen Film bzw. um eine Folie von drei Schichten von jeweils ungefähr 10 µm Dicke, wobei eine Polyethylenbarriereschicht bevorzugt beidseitig jeweils einer Polyethylen basierten Klebeschicht (ebenfalls etwa 10 µm dick) benachbart vorgesehen ist.

Mit dem erfindungsgemäßen Fahrzeugverkleidungsteil ist es möglich eine stabile Verbindung mit dem Dekormaterial zu erzielen, wobei auch sehr hohe Spezifikationsanforderungen, wie beispielsweise ein ausreichendes Klebevermögen zwischen der Dekorschicht 20 und dem Rest des Fahrzeugverkleidungsteils 10 selbst bei vergleichsweise hohen Temperaturen, erfüllt werden können. Dies ist insbesondere bei einer Verwendung des Fahrzeugverkleidungsteils 10 als Dachhimmel von Vorteil.

### Bezugszeichenliste

- 1: Klebeschicht
- 2: Barriereschicht
- 10: Fahrzeugverkleidungsteil
- 11: Sichtseitenvlieslage
- 11': Klebemittel/Klebepunkte
- 12: erste Barrierefolienlage
- 13, 15: Glasfaserlagen (glass roving, lose geschnittene Glasfasern)
- 14: Polyurethan-Schaumlage
- 16: zweite Barrierefolienlage
- 17: Rückseitenvlieslage
- 20: Dekorschicht
- 21: SichtseiteNorderseite
- 22: Rückseite
- 30: Teilaufbau des Fahrzeugverkleidungsteils
- 100: bekanntes Fahrzeugverkleidungsteil
- 101: Polyurethanfolie
- 102: Polyamidklebevlies
- 103: Glasfasern
- 104: Polyurethan-Schaum
- 105: Glasfasern
- 106: Klebe-/Barriereschicht
- 107: Rückseitenvlies

## Patentansprüche

1. Fahrzeugverkleidungsteil (10), insbesondere für den Fahrzeuginnenraum, mit einer Sichtseite (21) und einer gegenüberliegenden Rückseite (22), wobei das Fahrzeugverkleidungsteil (10) wenigstens eine Glasfaserlage (13, 15) und eine Polyurethan-Schaumlage (14) aufweist, wobei das Fahrzeugverkleidungsteil (10) ferner seiner Rückseite (22) zugewandt eine zweite Barrierefolienlage (16) und eine Rückseitenvlieslage (17) aufweist, wobei das Fahrzeugverkleidungsteil (10) seiner Vorderseite (21) zugewandt zunächst eine erste Barrierefolienlage (12) aufweist und weiterhin stärker der Vorderseite (21) zugewandt eine Sichtseitenvlieslage (11) aufweist, **dadurch gekennzeichnet, dass** die Sichtseitenvlieslage (11) rückseitig ein Klebemittel (11') aufweist, und das Klebemittel (11') nichtzusammenhängende Klebepunkte (11') umfasst, insbesondere LDPE Klebepunkte.

2. Fahrzeugverkleidungsteil (10) nach einem der vorhergehenden Ansprüche, **dadurch gekennzeichnet, dass** die erste Barrierefolienlage (12) und/oder die zweite Barrierefolienlage (16) eine Barriereschicht (2) aufweist.

3. Fahrzeugverkleidungsteil (10) nach einem der vorhergehenden Ansprüche, **dadurch gekennzeichnet, dass** die erste Barrierefolienlage (12) und/oder die zweite Barrierefolienlage (16) der Barriereschicht (2) benachbart einseitig oder beidseitig eine Klebeschicht (1) aufweist.

4. Fahrzeugverkleidungsteil (10) nach einem der vorhergehenden Ansprüche, **dadurch gekennzeichnet, dass** der Schichtaufbau des Fahrzeugverkleidungsteils (10) zwischen der Sichtseitenvlieslage (11) und der Rückseitenvlieslage (17) im wesentlichen symmetrisch vorgesehen ist oder dass der Schichtaufbau des Fahrzeugverkleidungsteils (10) zwischen der Sichtseitenvlieslage (11) und der Rückseitenvlieslage (17) außer dem Klebemittel (11') symmetrisch vorgesehen ist.

5. Fahrzeugverkleidungsteil (10) nach einem der vorhergehenden Ansprüche, **dadurch gekennzeichnet, dass** die Sichtseitenvlieslage (11) und/oder die Rückseitenvlieslage (17) ein Polyestervliesmaterial aufweist und/oder dass die Barriereschicht (2) der ersten Barrierefolienlage (12) und/oder der zweiten Barrierefolienlage (16) eine Polyethylen-Barriereschicht aufweist und/oder dass die Klebeschicht (1) oder die Klebeschichten (1, 2) der ersten Barrierefolienlage (12) und/oder der zweiten Barrierefolienlage (16) eine Polyethylen-Klebeschicht aufweist.

6. Verfahren zur Herstellung eines Fahrzeugverkleidungsteils (10) mit einer Sichtseite (21) und einer gegenüberliegenden Rückseite (22), wobei das Fahrzeugverkleidungsteil (10) wenigstens eine Glasfaserlage (13, 15) und eine Polyurethan-Schaumlage (14) aufweist, wobei das Fahrzeugverkleidungsteil (10) femer seiner Rückseite (22) zugewandt eine zweite Barrierefolienlage (16) und eine Rückseitenvlieslage (17) aufweist, wobei das Fahrzeugverkleidungsteil (10) seiner Vorderseite (21) zugewandt zunächst eine erste Barrierefolienlage (12) aufweist und weiterhin stärker der Vorderseite (21) zugewandt eine Sichtseitenvlieslage (11) aufweist, wobei die Sichtseitenvlieslage (11) rückseitig ein Klebemittel (11') aufweist, wobei in einem ersten Verfahrensschritt die erste Barrierefolienlage (12), die Glasfaserlage (13, 15), die Polyurethan-Schaumlage (14), die zweite Barrierefolienlage (16) und die Rückseitenvlieslage (17) miteinander kalandriert werden und **dadurch gekennzeichnet, dass** anschließend bei dem Verbinden der Sichtseitenvlieslage (11) mit der ersten Barrierefolienlage (12) zwischen der Sichtseitenvlieslage (11) und der ersten Barrierefolienlage (12) das Klebemittel (11') derart angeordnet wird, dass das Klebemittel nichtzusammenhängende Punkte umfasst, insbesondere LDPE Klebepunkte und in einem zweiten Verfahrensschritt die Dekorschicht (20) in einem Formungs- und Verbindungsprozess aufgebracht wird.

## Claims

1. Vehicle trim part (10), in particular for the vehicle interior, having a visible side (21) and a rear side (22) which lies opposite it, the vehicle trim part (10) having at least one glass-fibre layer (13, 15) and a polyurethane foam layer (14), the vehicle trim part (10) having, furthermore, facing its rear side (22), a second barrier film layer (16) and a rear-side nonwoven layer (17), the vehicle trim part (10) having, facing its front side (21), first of all a first barrier film layer (12) and, furthermore, having, facing the front side (21) to a more pronounced extent, a visible-side nonwoven layer (11), **characterized in that** the visibleside nonwoven layer (11) has an adhesive (11') on the rear side, and the adhesive (11') comprises non-contiguous adhesive dots (11'), in particular LDPE adhesive dots.

2. Vehicle trim part (10) according to the preceding claim, **characterized in that** the first barrier film layer (12) and/or the second barrier film layer (16) have/has a barrier layer (2).

3. Vehicle trim part (10) according to one of the preceding claims, **characterized in that** the first barrier film layer (12) and/or the second barrier film layer (16) have/has an adhesive layer (1) one side or both sides, adjacent to the barrier layer (2).

4. Vehicle trim part (10) according to one of the preceding claims, **characterized in that** the layer construction of the vehicle trim part (10) between the visible-side nonwoven layer (11) and the rear-side nonwoven layer (17) is provided so as to be substantially symmetrical, or **in that** the layer construction of the vehicle trim part (10) between the visible-side nonwoven layer (11) and the rear-side nonwoven layer (17) is provided so as to be symmetrical apart from the adhesive (11').

5. Vehicle trim part (10) according to one of the preceding claims, **characterized in that** the visible-side nonwoven layer (11) and/or the rear-side nonwoven layer (17) have/has a polyester nonwoven material, and/or **in that** the barrier layer (2) of the first barrier film layer (12) and/or of the second barrier film layer (16) has a polyethylene barrier layer, and/or **in that** the adhesive layer (1) or the adhesive layers (1, 2) of the first barrier film layer (12) and/or of the second barrier film layer (16) has/have a polyethylene adhesive layer.

6. Method for producing a vehicle trim part (10) having a visible side (21) and a rear side (22) which lies opposite it, the vehicle trim part (10) having at least one glass-fibre layer (13, 15) and a polyurethane foam layer (14), the vehicle trim part (10) having, furthermore, facing its rear side (22), a second barrier film layer (16) and a rear-side nonwoven layer (17), the vehicle trim part (10) having, facing its front side (21), first of all a first barrier film layer (12) and, furthermore, having, facing the front side (21) to a more pronounced extent, a visible-side nonwoven layer (11), the visable-side nonwoven layer (11) having an adhesive (11') on the rear side, the first barrier film layer (12), the glass-fibre layer (13, 15), the polyurethane foam layer (14), the second barrier film layer (16) and the rear-side nonwoven layer (17) being calendered with one another in a first method step, and **characterized in that** subsequently, during the joining of the visible-side nonwoven layer (11) to the first barrier film layer (12), the adhesive (11') is arranged between the visible-side nonwoven layer (11) and the first barrier film layer (12) in such a way that the adhesive comprises non-contiguous dots, in particular LDPE adhesive dots, and the decorative layer (20) is applied in a forming and joining process in a second method step.

## Revendications

1. Pièce d'habillage de véhicule (10), en particulier pour l'intérieur d'un véhicule, avec une face visible (21) et une face arrière opposée (22), dans laquelle la pièce d'habillage de véhicule (10) présente au moins une couche de fibre de verre (13, 15) et une couche de mousse de polyuréthane (14), dans laquelle la pièce d'habillage de véhicule (10) présente en outre, tournées vers sa face arrière (22), une deuxième couche de feuille de barrière (16) et une couche de toile côté arrière (17), dans laquelle la pièce d'habillage de véhicule (10) présente, tournées vers sa face avant (21), d'abord une première couche de feuille de barrière (12) et en outre, tournée plus fortement vers la face avant (21), une couche de toile côté visible (11), **caractérisée en ce que** la couche de toile côté visible (11) présente à la face arrière un agent adhésif (11') et l'agent adhésif (11') comprend des points de colle non jointifs (11'), en particulier des points de colle LDPE.

2. Pièce d'habillage de véhicule (10) selon la revendication précédente, **caractérisée en ce que** la première couche de feuille de barrière (12) et/ou la deuxième couche de feuille de barrière (16) présente une couche de barrière (2).

3. Pièce d'habillage de véhicule (10) selon l'une quelconque des revendications précédentes, **caractérisée en ce que** la première couche de feuille de barrière (12) et/ou la deuxième couche de feuille de barrière (16) présente, sur une face ou sur les deux faces, une couche de colle (1) à proximité de la couche de barrière (2).

4. Pièce d'habillage de véhicule (10) selon l'une quelconque des revendications précédentes, **caractérisée en ce que** la structure en couches de la pièce d'habillage de véhicule (10) est prévue de façon essentiellement symétrique entre la couche de toile côté visible (11) et la couche de toile côté arrière (17) ou **en ce que** la structure en couches de la pièce d'habillage de véhicule (10) est prévue de façon symétrique, à l'exception de l'agent adhésif (11') entre la couche de toile côté visible (11) et la couche de toile côté arrière (17).

5. Pièce d'habillage de véhicule (10) selon l'une quelconque des revendications précédentes, **caractérisée en ce que** la couche de toile côté visible (11) et/ou la couche de toile côté arrière (17) présente une matière de toile en polyester et/ou **en ce que** la couche de barrière (2) de la première couche de feuille de barrière (12) et/ou de la deuxième couche de feuille de barrière (16) présente une couche de barrière en polyéthylène et/ou **en ce que** la couche de colle (1) ou les couches de colle (1, 2) de la première couche de feuille de barrière (12) et/ou de la deuxième couche de feuille de barrière (16) présente une couche de colle au polyéthylène.

6. Procédé de fabrication d'une pièce d'habillage de véhicule (10) avec une face visible (21) et une face arrière opposée (22), dans laquelle la pièce d'habillage de véhicule (10) présente au moins une couche de fibre de verre (13, 15) et une couche de mousse de polyuréthane (14), dans laquelle la pièce d'habillage de véhicule (10) présente en outre, tournées vers sa face arrière (22), une deuxième couche de feuille de barrière (16) et une couche de toile côté arrière (17), dans laquelle la pièce d'habillage de véhicule (10) présente, tournées vers sa face avant (21), d'abord une première couche de feuille de barrière (12) et en outre, tournée plus fortement vers la face avant (21), une couche de toile côté visible (11), dans laquelle la couche de toile côté visible (11) présente à la face arrière un agent adhésif (11'), dans lequel, dans une première étape du procédé, la première couche de feuille de barrière (12), la couche de fibre de verre (13, 15), la couche de mousse de polyuréthane (14), la deuxième couche de feuille de barrière (16) et la couche de toile côté arrière (17) sont calandrées les unes aux autres, **caractérisé en ce qu'**ensuite, lors de l'assemblage de la couche de toile côté visible (11) avec la première couche de feuille de barrière (12), l'agent adhésif (11') est disposé entre la couche de toile côté visible (11) et la première couche de feuille de barrière (12) d'une manière telle que l'agent adhésif comprenne des points non jointifs, en particulier des points de colle LDPE, et **en ce que**, dans une deuxième étape du procédé, la couche décorative (20) est appliquée par un processus de mise en forme et d'assemblage.
